# EUROPÄISCHE PATENTSCHRIFT

(11) **EP 2 823 869 B1**
(45) Veröffentlichungstag und Bekanntmachung des Hinweises auf die Patenterteilung: **01.06.2016**
(21) Anmeldenummer: 14175745.0
(22) Anmeldetag: 04.07.2014
(51) Int. Cl.: B01D 35/18

(54) **Vorrichtung und Verfahren zum Reinigen einer Reinigungslauge in einem Reinigungssystem**
Device and method for cleaning a cleaning lye in a cleaning system
Dispositif et procédé de nettoyage d'une lessive alcaline dans un système de nettoyage

(30) Priorität: 12.07.2013 DE 102013213666
(43) Veröffentlichungstag der Anmeldung: 14.01.2015
(73) Patentinhaber: Krones AG, 93073 Neutraubling (DE)
(72) Erfinder: Friedlaender, Thomas, 93073 Neutraubling (DE)
(74) Vertreter: Grünecker Patent- und Rechtsanwälte PartG mbB

(56) Entgegenhaltungen:
- WO-A2-03/064716
- DE-A1-102012 215 752
- DE-B- 1 278 952
- JP-A- 2001 300 938

## Beschreibung

### Hintergrund der Erfindung

Siebe oder Filter zum Sieben oder Filtrieren von Fluiden sind im Stand der Technik bekannt. Ebenso ist im Stand der Technik bekannt, dass sich derartige Filter oder Siebe insbesondere auf der Seite des Filters zusetzen oder verstopfen, von der das Fluid auf die Filterfläche trifft. Man spricht auch von einer Verblockung des Siebs / des Filters. Häufig muss eine mechanische Reinigung der Filterflächen wie Abbürsten, Abschaben, Entleeren der Rückstände aus dem Filtergehäuse oder dergleichen durchgeführt werden, oder es werden chemische Reinigungsflüssigkeiten eingesetzt. Häufig muss das Sieb / der Filter bei Verstopfung oder Verblockung geöffnet werden, wodurch Wartezeiten oder Standzeiten entstehen.

In einem Reinigungssystem, insbesondere im Recylingbereich, werden beispielsweise Gegenstände wie Behälter, Flaschen, Polyethylenterephthalat-Flaschen (PET-Flaschen) mit einer Reinigungslauge gereinigt. Häufig werden statt ganzer Gegenstände auch nur Bruchstücke dieser Gegenstände gereinigt, beispielsweise (grob) geschredderte PET-Flaschen, sogenannte PET-Flakes, oder Kunststoffstücke. Es ist im Stand der Technik bekannt, dass ein oder mehrere Stufen zum intensiven Reinigen oder Waschen der Gegenstände verwendet werden. Die Stufen können Waschmaschinen oder Reinigungseinheiten repräsentieren. In diesen Stufen wird eine Reinigungslauge oder geeignete Waschflüssigkeit eingesetzt. Häufig ist die Reinigungslauge warm.

In derartigen Reinigungssystemen kann beispielsweise die verwendete Reinigungslauge gereinigt und zumindest teilweise wiederverwendet werden. Die Reinigung der Reinigungslauge kann Bestandteil des Reinigungszyklus im Reinigungssystem sein. Eine Grobfilterung kann größere feste Bestandteile häufig abseparieren. Häufig findet die Grobfilterung noch in der jeweiligen Waschmaschine statt. Anschließend ist die Reinigungslauge dann häufig noch mit organischen Resten wie Papierresten aus Etiketten und vor allem Klebstoffresten verschmutzt. Eine feinere Filterung oder Siebung der Reinigungslauge führt dann zu dem folgenden Problem. Wird die Reinigungslauge filtriert oder gesiebt, so können vor allem Klebstoffreste ein zur Filterung verwendetes Sieb zusetzen. Das Sieb kann verstopfen und es kann eine Verblockung des Siebes auftreten. Dieses Problem tritt besonders bei Sieben oder Filtern mit feinen, engmaschigen Siebgeweben auf. Da eine Veränderung der Durchflussparameter durch das Sieb, wie etwa Druckerhöhung meist nur sehr eingeschränkt möglich ist und in der Regel auch unerwünscht ist, muss häufig eine Wartung des Siebes eingeleitet werden. Dadurch kann die Effizienz des Reinigungssystems, in dem das Sieb verwendet werden soll, sinken. Alternativ müsste auf ein gröberes Sieb oder Filter zurück gegriffen werden, was in der Regel ebenfalls die Effizienz des Reinigungssystems verringert.

Das Dokument DE102012215752 (Offenlegungstag: 06.03.2014, Anmeldetag: 05.09.2012) beschreibt eine Anlage zum Wiederaufbereiten von etikettierten Kunststoffartikeln (Flaschen etc). Laut diesem Dokument werden die Etikettenreste vor jedem weiteren Schritt maschinell oder manuell abgelöst und aussortiert.

Angesichts der oben beschriebenen Probleme ist es Aufgabe der vorliegenden Erfindung, eine Vorrichtung zum Reinigen einer Reinigungslauge in einem Reinigungssystem bereitzustellen, die es in einfacher und effizienter Weise ermöglicht, eine Reinigungslauge in einem Reinigungssystem zu filtrieren und dabei eine längere Betriebszeiten für entsprechende Siebe und Filter bereitzustellen und den Wartungsaufwand zu senken. Die Notwendigkeit zur Reinigung der Siebe und damit verbundene Produktionsunterbrechungen soll gesenkt werden und Verblockungen der Filter / Siebe vermindert oder gar vermieden werden. Gleichzeitig soll die Effizienz der Reinigung der Reinigungslauge, insbesondere im Hinblick auf Entfernen von klebrigen Stoffen möglichst erhöht werden.

### Beschreibung der Erfindung

Diese Aufgabe wird durch ein System gemäß Anspruch 1 gelöst sowie durch ein entsprechendes Verfahren gemäß Anspruch 10.

Für das Folgende sollen die Begriffe Sieb und Filter synonym verstanden werden, sofern nicht ausdrücklich auf eine unterschiedliche Bedeutung hingewiesen wird. Ebenso sollen die Begriffe Sieben und Filtern/Filtrieren synonym verstanden werden. Gleiches gilt für die Begriffe Filtergewebe und Siebgewebe.

Die Erfindung stellt bereit: eine Vorrichtung zum Reinigen einer Reinigungslauge in einem Reinigungssystem, wobei die Vorrichtung ein oder mehrere beheizbare Siebe zum Filtern der Reinigungslauge umfasst.

Die beheizbaren Siebe haben den Vorteil, dass sie sich weniger schnell mit Kleberesten, Klebstoffen oder klebrigen organischen Resten zusetzen. Dabei sollen die Begriffe Klebereste, Klebstoffe und Leim synonym verstanden werden.

Das beheizbare Sieb ist gegenüber einem normalen Sieb durch die Beheizung in der Temperatur des Siebes, insbesondere des Siebgewebes, gezielt veränderbar. Mit dem Begriff "Temperatur eines Siebes" soll die mittlere Temperatur der Sieb- oder Filterfläche, also des Siebgewebes verstanden werden. Damit soll auch die Temperatur, die durch eine optionale Temperaturregelung regelbar ist, gemeint sein. Soweit nicht explizit anders formuliert soll eine erhöhte Temperatur eines Siebes im Folgenden auf Raumtemperatur bezogen sein. Das heißt, ein Sieb mit einer erhöhten Temperatur soll eine gegenüber Raumtemperatur erhöhte Temperatur aufweisen.

Ein beheizbares Sieb kann in seinem Filterbereich die Klebrigkeit oder Viskosität von Kleberesten beeinflussen. Insbesondere kann die Klebrigkeit oder Viskosität der Klebereste bei Erhöhung der Temperatur abnehmen, wodurch die Klebereste dünnflüssiger werden können und so leichter durch das Filtergewebe fließen können. Dadurch können sie nicht so stark am Sieb, insbesondere an dessen Filterfläche / Siebfläche anhaften. Dadurch kann das Sieb weniger stark verblocken oder verstopfen, so dass dieses Sieb kontrolliert sauberer bleibt, also weniger verklebt, verstopft oder verblockt wird, oder kontrolliert reinigbar ist, also eine bereits vorhandene Verklebung von diesem Sieb verringerbar ist. Damit kann auch bezogen auf dieses Sieb die Effizienz der Filterung der Reinigungslauge erhöht werden. Ebenso ergibt sich die Möglichkeit, feinere Siebe zu verwenden, also Siebe mit einem feineren, engeren Siebgewebe. Dadurch können festere oder viskosere Partikel besser entfernt werden.

Die Vorrichtung kann mindestens zwei beheizbare Siebe umfassen, die derart parallel angeordnet sind, dass sie ein paralleles Filtrieren durch beide Siebe ermöglichen.

Die parallele Anordnung von zwei oder mehr Sieben ermöglicht die parallele Verwendung von zwei oder mehr Sieben. Dabei kann insbesondere wenigstens ein Sieb anders als die anderen Siebe beheizt werden, beispielsweise mit einer anderen Temperatur. Dadurch kann die Temperatur der Siebe gezielt verändert werden, und zwar für wenigstens ein Sieb unterschiedlich als für die übrigen Siebe. Es kann sogar möglich sein, jedem Sieb eine individuelle Temperatur durch individuelles Beheizen zuzuordnen. Die Erhöhung der Temperatur kann die Klebrigkeit oder Viskosität von Kleberesten beeinflussen, insbesondere kann die Klebrigkeit oder Viskosität abnehmen, wodurch die Klebereste dünnflüssiger werden können und somit leichter durch das Filtergewebe fließen können. Umgekehrt kann eine niedrigere Temperatur für ein Sieb die Klebrigkeit oder Viskosität der Klebereste erhöhen. Dabei kann das nicht beheizte Sieb beispielsweise Raumtemperatur haben. Dadurch können mehr Klebereste an dem Sieb mit der im Vergleich zu anderen Sieben niedrigeren Temperatur anheften. Ein parallel angeordnetes Sieb mit einer niedrigeren Temperatur kann somit gezielt zum Sammeln von Kleberesten verwendet werden. Diese können dann zu einem geeigneten Zeitpunkt entfernt werden. Praktisch gleichzeitig kann ein paralleles Sieb, das durch Beheizung auf eine höhere Temperatur erwärmt ist, die Filterfunktion aufrecht erhalten. Damit können auch die Siebe gezielt temperaturgesteuert verwendet werden. Es ist ebenso möglich die Siebe für einen gewünschten Zeitraum mit praktisch derselben Siebtemperatur zu betreiben und dann die Temperatur eines Siebes zu verändern. So kann eine Phase zum Sammeln von Kleberesten individuell eingeleitet werden.

In der Vorrichtung können die Siebe elektrisch beheizbar sein.

Das elektrische Beheizen kann auf einfache und robuste Weise das Erwärmen der Siebe sicherstellen. Im einfachsten Fall kann das Beheizen ähnlich dem Prinzip einer elektrischen Glühlampe geschehen.

Die Vorrichtung kann ferner eine Temperaturkontrolleinheit umfassen, die zum kontinuierlichen oder intervallweisen Messen der Temperatur der Siebe ausgebildet ist und zum Regeln der Temperatur der Siebe innerhalb eines vorgegebenen Temperaturbereiches, und insbesondere ausgebildet ist, die elektrische Leistungsaufnahme der Siebe zu regeln.

Die Temperaturkontrolleinheit kann relativ enge Temperaturgrenzen einhalten. Dadurch kann ein Verkohlen oder Verkoken von Klebstoffresten oder Materialresten auf dem Sieb vermieden werden. Somit kann eine zumindest vorübergehende Beeinträchtigung oder gar Unbrauchbarkeit des Siebes vermieden werden. Die Temperaturkontrolleinheit kann die Temperatur von ein oder mehreren Siebe überwachen. Dabei können die Siebe unterschiedliche Temperaturen haben.

Die Temperaturkontrolleinheit kann insbesondere bei parallel angeordneten Sieben die Temperatur der jeweiligen Siebe unterschiedlich regeln, so dass die Beeinflussung der Klebrigkeit oder Viskosität von Kleberesten für jedes Sieb individuell geregelt werden kann.

In der Vorrichtung kann die Temperaturkontrolleinheit zum Regeln der Temperatur jedes der Siebe ausgebildet ist, wobei jedes der Siebe einen eigenen vorgegebenen Temperaturbereich hat.

In der Vorrichtung kann, wenn die gemessene Temperatur des Siebes außerhalb des vorgegebenen Temperaturbereiches des Siebes liegt, die Temperaturkontrolleinheit ausgebildet ist, die Temperatur automatisch nachzuregeln, so dass die Temperatur des Siebes innerhalb des vorgegebenen Temperaturbereichs des Siebes gebracht werden kann.

Die Temperaturkontrolleinheit kann eine CPU oder Steuereinheit umfassen, die die vorgegebenen Werte für die Temperaturbereich abrufen kann und mit den gemessenen Werten vergleichen kann. Dadurch kann die Temperaturkontrolleinheit so eingestellt werden, dass eine automatische Überwachung der Temperatur der Siebe erfolgen kann.

In der Vorrichtung können die Siebe ein Siebgewebe umfassen, das elektrisch leitendes Gewebe, beispielsweise aus Metallfäden, umfasst.

Die Metallfäden lassen sich besonders einfach elektrisch beheizen.

Die Vorrichtung zum Reinigen einer Reinigungslauge kann beispielsweise in einem Reinigungssystem integriert werden. Das Reinigungssystem ist häufig mehrteilig und besitzt einen eigenen Abschnitt zum Reinigen der Reinigungslauge.

In dem Reinigungssystem kann die Waschvorrichtung eine Flaschenwaschmaschine oder eine Maschine zum Reinigen von PET-Flakes sein.

Die Erfindung stellt ferner bereit: Ein Verfahren zum Reinigen einer Reinigungslauge in einem Reinigungssystem mit einem oder mehreren beheizbaren Sieben, umfassend: Filtern der Reinigungslauge; Beheizen eines oder mehrerer Siebe zur Beeinflussung des Anhaftens von klebrigem Material an die Siebe.

Die Vorteile des Verfahrens sind bereits oben beschrieben worden.

Das Verfahren kann ferner den Schritt paralleles Filtern der Reinigungslauge durch die wenigstens zwei Siebe umfassen.

Das Verfahren kann ferner den folgenden Schritt umfassen: Spülen wenigstens eines der Siebe, insbesondere Spülen wenigstens eines der beheizten Siebe.

Es kann somit ein Sieb durch Spülen gereinigt werden. Insbesondere können mehrere Siebe durch Spülen gereinigt werden. Beispielsweise können ein oder mehrere Siebe beheizt werden und eines oder mehrere dieser Siebe können dann gespült werden. Hierdurch können an dem Filter anhaftende Medien besser vom Filter abgelöst werden. Es können beispielsweise bei mehreren Sieben einige der Siebe beheizt und/oder gespült werden, während ein oder mehrere andere Siebe weiterhin zum Filtrieren verwendet werden können. Das Spülen kann einschaltbar sein. Ein Sieb kann somit gezielt beheizt und gereinigt, also insbesondere gespült werden, ohne dass die Filtrierung mittels anderer Siebe unterbrochen werden muss.

Dabei können die Siebe elektrisch beheizbar sein.

Das Verfahren kann weiterhin umfassen: kontinuierliches oder intervallweises Messen der Temperatur der Siebe, und Regeln der Temperatur der Siebe innerhalb eines vorgegebenen Temperaturbereiches, insbesondere Regeln der elektrischen Leistungsaufnahme der Siebe.

Das Verfahren kann weiterhin umfassen: wenn die gemessene Temperatur des Siebes außerhalb des vorgegebenen Temperaturbereiches liegt, Nachregeln der Temperatur des Siebes, so dass die Temperatur des Siebes innerhalb des vorgegebenen Temperaturbereichs gebracht werden kann, wobei insbesondere jedes Sieb einen eigenen Temperaturbereich hat.

Dabei können die Siebe ein Siebgewebe umfassen, das elektrisch leitendes Gewebe, beispielsweise aus Metallfäden, umfasst.

Im Folgenden werden Ausführungsformen der Erfindung unter Bezugnahme auf die Figuren beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

Es zeigen:
- Figur 1:: Schematische Ansicht einer Vorrichtung zum Reinigen einer Reinigungslauge in einem Reinigungssystem entsprechend der vorliegenden Erfindung.
- Figur 2:: Schematische Ansicht einer Vorrichtung zum Reinigen einer Reinigungslauge in einem Reinigungssystem, entsprechend Figur 1 mit einer Temperaturkontrolleinheit.

- Figur 3:: Schematische Ansicht einer Vorrichtung zum Reinigen einer Reinigungslauge in einem Reinigungssystem, ähnlich wie in Figur 1 oder 2 mit mehreren parallelen Sieben.
- Figur 4:: Schematische Ansicht einer Vorrichtung zum Reinigen einer Reinigungslauge in einem Reinigungssystem, ähnlich wie in Figur 2 oder 3, mit hintereinandergeschalteten Sieben.

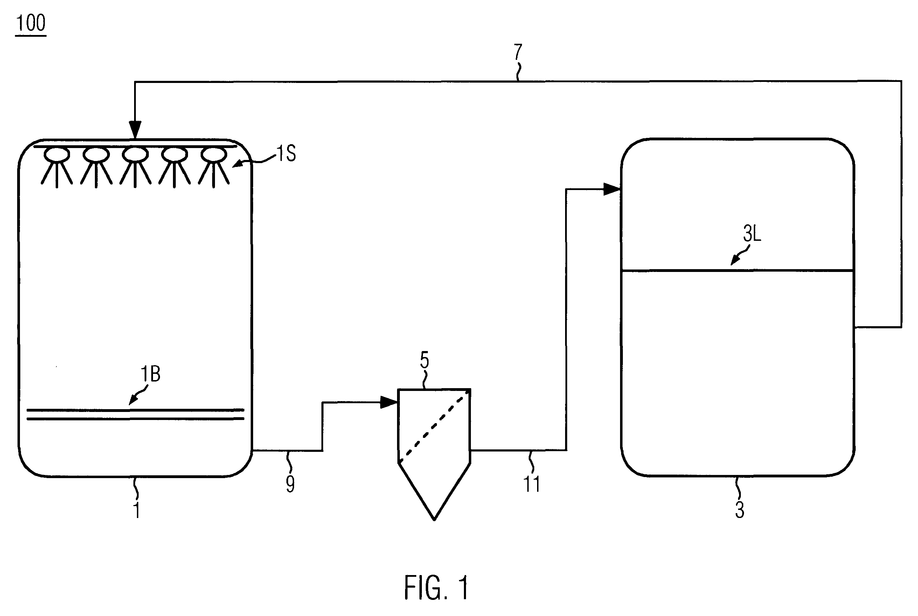

Die Figur 1 zeigt eine schematische Ansicht einer Vorrichtung zum Reinigen einer Reinigungslauge in einem Reinigungssystem 100 entsprechend der vorliegenden Erfindung. In Figur 1 umfasst das Reinigungssystem 100 rein beispielhaft eine einzelne Waschanlage oder Waschmaschine 1, die für die intensive Wäsche oder Reinigung von Gegenständen ausgebildet sein kann. Es versteht sich, dass das Reinigungssystem mehr als eine Waschmaschine umfassen kann. Diese können beispielsweise hintereinander geschaltet sein. Es versteht sich ebenso, dass die Waschmaschine die zu reinigenden Gegenstände bei verschiedenen Waschtemperaturen reinigen können. Die Gegenstände (nicht gezeigt) können beispielsweise Flaschen aus Glas sein oder PET-Flaschen oder andere recycelbare Behälter. Ebenso kann die Waschanlage ausgebildet sein, (grob) zerkleinerte, geschredderte PET-Flaschen, also PET-Stücke oder PET-Flakes zu reinigen. Die Gegenstände (nicht gezeigt) in der Waschmaschine 1 können auf Transportmitteln 1 B, beispielsweise Transportbändern durch die Waschmaschine 1 während des Reinigungsvorgang hindurch transportiert werden. Die Waschlauge oder Reinigungslauge zum Reinigen der Gegenstände wird aus Sprühvorrichtungen 1S auf die Gegenstände gesprüht. Rein anschaulich zeigt Figur 1 eine Reihe von fünf Sprühvorrichtungen 1 S, die die Gegenstände von oben mit der Reinigungslauge besprühen können. Es ist aber ebenso möglich, eine andere Anzahl von Sprühvorrichtungen 1S zu verwenden. Die Reinigungslauge wird aus dem Reinigungslaugentank 3 zur Waschmaschine 1 geleitet. In Figur 1 ist dazu schematisch die Verbindung 7 gezeigt. Diese kann beispielsweise als Rohr ausgebildet sein. Dazu können geeignete Pumpen (nicht gezeigt) verwendet werden. Die Reinigungslauge kann in dem Reinigungslaugentank 3 auf eine bestimmte Temperatur gebracht werden oder gehalten werden. Eingezeichnet ist ferner ein Laugenspiegel 3L, der die Füllhöhe der Reinigungslauge im Reinigungslaugentank angibt.

Die in der Waschmaschine 1 auf die Gegenstände aufgesprühte Reinigungslauge sammelt sich als verwendete Reinigungslauge typischerweise im Bodenbereich der Waschmaschine 1. Hier kann bereits in der Waschmaschine 1 eine Grobfilterung vorgenommen werden, um größere Stücke oder Bruchteile von Material abzutrennen.

Die zur Reinigung der Gegenstände verwendete Reinigungslauge wird mittels einer Leitung / eines Verbindungsrohres 9 zur Reinigungsvorrichtung zur Reinigung der Reinigungslauge gebracht. Mögliche Pumpen oder Ventile für die Verbindung sind nicht gezeigt. Die Reinigungsvorrichtung umfasst ein beheizbares Sieb 5. Das Sieb 5 kann elektrisch beheizbar sein. Dazu kann eine elektrische Heizeinrichtung (nicht gezeigt) verwendet werden. Es ist auch möglich, eine andere Heizeinrichtung zu verwenden. Insbesondere kann das Sieb 5 in einfacher Weise wie eine elektrische Glühbirne verwendet werden, in dem Strom durch das Siebgewebe / Filtergewebe geleitet wird. Das Siebgewebe ist typischerweise ausreichend leiten. Beispielsweise ist das Siebgewebe aus Metall, etwa aus metallischen Fäden.

Die von der Waschmaschine 1 abgeleitete Reinigungslauge enthält auch nach einer Grobfilterung zumindest noch teilweise klebrige, häufig organische Reste, Klebstoffe, Kleberest oder dergleichen. Die Das Beheizen des Siebes 5 ermöglicht es, das Sieb 5, insbesondere dessen Siebfläche besser vor Verstopfung durch die Klebereste aus der Reinigungslauge zu bewahren. Die Klebrigkeit oder Viskosität der Klebereste wird bei steigender Temperatur geringer, so dass gezielt im Sieb eine Wirkung über das Siebgitter erzielt werden kann. Dadurch können die Ablagerungen auf dem Sieb reduziert werden und das Sieb kann länger verwendet werden. Es versteht sich, dass diese Wirkung insbesondere direkt am Sieb und seinem Siebgitter erfolgen kann. Es kann in einem Reinigungssystem wie dem Reinigungssystem 100 zusätzlich auch noch Sedimentierstellen geben, wo sich Schwebstoffe aus der Lauge absetzen können. Nach dem Filtern durch das Sieb 5 wird die so gefilterte Reinigungslauge über die Leitung / das Verbindungsrohr 11 zum Reinigungslaugentank 3 geleitet.

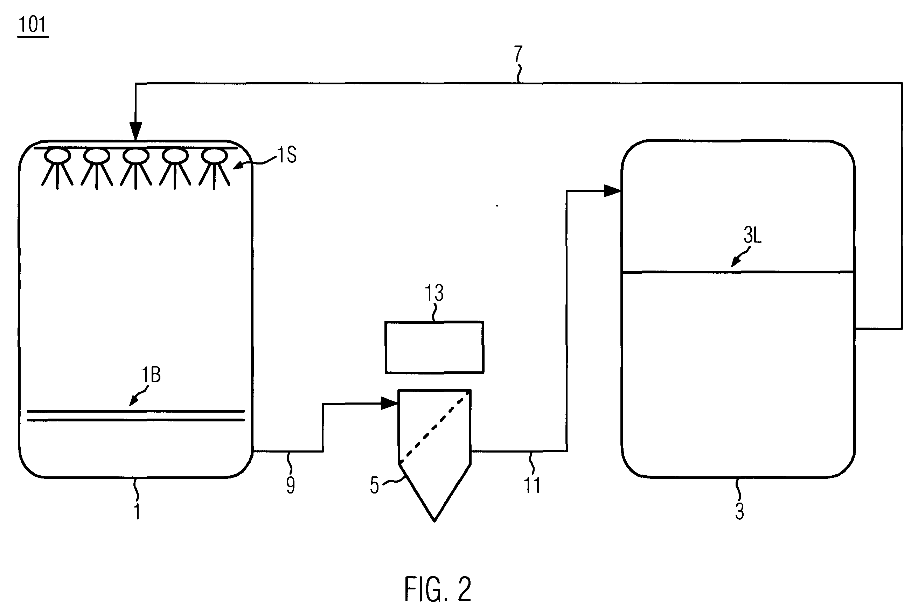

Die Figur 2 zeigt ähnlich wie die Figur 1 eine schematische Ansicht einer Vorrichtung zum Reinigen einer Reinigungslauge in einem Reinigungssystem 101, entsprechend Figur 1 mit einer Temperaturkontrolleinheit 13. Dabei sind gleiche Elemente mit gleichen Bezugszeichen wie in Figur 1 versehen. Im Unterschied zu Figur 1 ist in der Figur 2 die Temperaturkontrolleinheit 13 gezeigt. In Figur 2 ist die Temperaturkontrolleinheit 13 separat vom Sieb 5 gezeigt. Es ist aber ebenso möglich, die Temperaturkontrolleinheit 13 und das Sieb 5 in einer Einheit zusammen auszubilden. Dies könnte beispielsweise dann geschehen, wenn größere Kompaktheit der Vorrichtung benötigt wird. Die Temperaturkontrolleinheit 13 ist in geeigneter Weise mit dem Sieb 5 derart verbunden (nicht gezeigt), dass Informationen von dem Sieb an die Temperaturkontrolleinheit 13 übermittelt werden können. Die Informationen können beispielsweise die Temperatur des Siebes 5, also insbesondere des Siebgewebes umfassen. Dazu kann am Sieb 5 oder im Sieb oder in unmittelbarer Nähe des Siebes ein geeigneter Temperatursensor (nicht gezeigt) bereitgestellt sein. Der Temperatursensor kann auch in der Temperaturkontrolleinheit 13 integriert sein, insbesondere dann, wenn diese eine Einheit mit dem Sieb 5 bildet.

Eine Temperaturkontrolleinheit 13 kann ein oder mehrere Siebe 5 kontrollieren. Die Temperatureinheit kann einen relativ engen Temperaturbereich, beispielsweise einige wenige Prozent um eine vorgegebene mittlere Temperatur herum, kontrollieren. Die Temperaturkontrolleinheit 13 kann die Temperatur für ein oder mehrere Siebe 5, insbesondere auch für sämtliche Siebe die Temperaturen überwachen, kontrollieren und nachregeln. Dadurch kann insbesondere ein Verkohlen oder Verkoken von Kleberesten auf dem Siebgewebe des Siebes 5 vermieden werden. Derartige Veränderungen der Klebereste würden die Klebereste ungewollt stark an das Siebgewebe anhaften lassen oder sogar das Sieb 5 unbrauchbar machen. Mittels der Temperaturkontrolleinheit 13 kann das Verkoken oder Verkohlen der Siebe 5 vermieden werden.

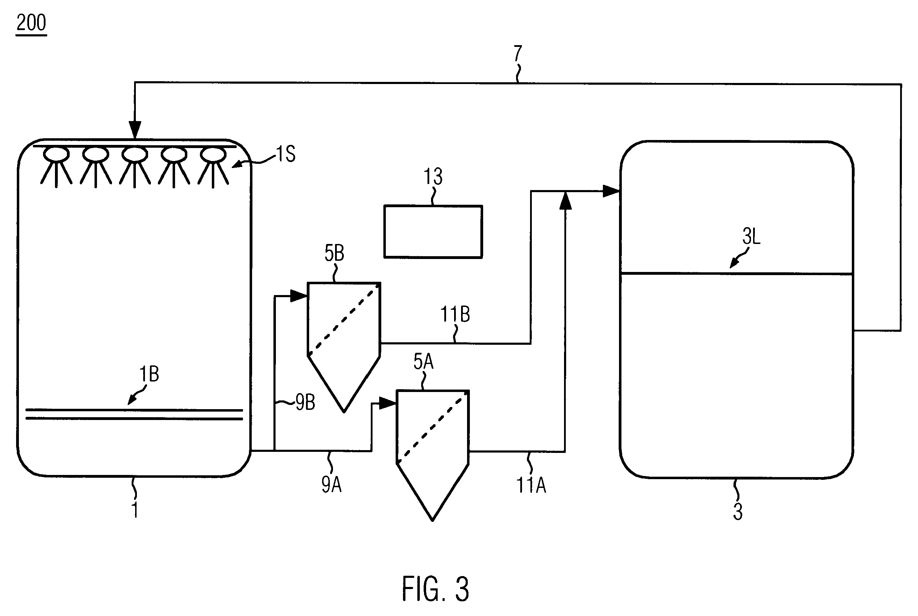

Die Figur 3 zeigt die schematische Ansicht einer Vorrichtung zum Reinigen einer Reinigungslauge in einem Reinigungssystem 200 in einer weiteren Weiterbildung. Gleiche Elemente wie in den Figuren 1 und 2 sind mit gleichen Bezugszeichen versehen.

Die Figur 3 zeigt unterscheidet sich insbesondere von der Figur 2 nur dadurch, dass sie zwei Siebe 5A und 5B zeigt, die parallel angeordnet sind und durch die praktisch parallel die Reinigungslauge gefiltert werden kann. Die Siebe 5A und 5B sind beispielsweise von derselben Art, wie das Sieb 5 in Figur 2 oder Figur 1. Es versteht sich, dass Figur 3 rein beispielhaft nur zwei Siebe zeigt. Es ist aber ebenso möglich, eine größere Anzahl von Sieben zu verwenden, von denen mehrere oder sogar alle parallel verwendet werden können. Es ist ebenso möglich, bei drei oder mehr Sieben (nicht gezeigt) einige Siebe sequentiell zu verwenden.

In der Figur 3 sind die Zuleitungen / Verbindungsrohre 9A und 9B von der Waschmaschine 1 beispielsweise von der gleichen Art wie die Zuleitung / das Verbindungsrohr 9 in den Figuren 1 oder 2. Gleiches gilt für die Leitungen / Verbindungsrohr 11A und 11 B, die dem Verbindungsrohr 11 aus den Figuren 1 oder 2 entsprechen können. Es versteht sich, dass die Verzweigung in Figur 3 in einfacher Weise und zur Erläuterung hinter der Waschmaschine 1 erfolgt und die entsprechende Zusammenführung vor dem Reinigungslaugentank 3. Es ist aber ebenso möglich, getrennte Verbindungsrohre zwischen Waschmaschine 1 und einem der Siebe 5A oder 5B vorzusehen. Ebenso können die Rohre 11A und 11 B getrennt in den Reinigungslaugentank 3 geführt werden.

In Figur 3 ist beispielhaft eine Temperaturkontrolleinheit 13 gezeichnet, die der Temperaturkontrolleinheit 13 aus Figur 2 entsprechen kann. Die Temperaturkontrolleinheit 13 kann ausgebildet sein, jedes der Siebe 5A und 5B zu kontrollieren und zu regeln. Dabei kann insbesondere die Temperatur des einen Siebes 5A oder 5B von der Temperatur des anderen Siebes 5B oder 5A unterschiedlich sein. In einem "Reinigungsmodus" kann beispielsweise die Temperatur des Siebes 5B niedriger gehalten werden als die des Siebes 5A. Dadurch kann das Sieb 5B gezielt zum Sammeln oder Auffangen von Kleberesten oder Leimresten verwendet werden. Der Reinigungsmodus kann zu einem bestimmten Zeitpunkt ein- oder ausgeschaltet werden. Beispielsweise kann aufgrund von Durchflussmessungen durch die Reinigungsvorrichtung, also die parallel angeordneten Siebe, festgestellt werden, wie viel Reinigungslauge noch durch die Siebe hindurch fließen kann. Entsprechende Messgeräte (nicht gezeigt) können beispielsweise durch eine Differenzmessung den Durchfluss durch die Reinigungsvorrichtung bestimmen. Dann kann beispielsweise die Temperatur eines Siebes gezielt abgesenkt werden, so dass sich in diesem Sieb Klebereste sammeln. Bei einer nachfolgenden Wartung kann dann das Sieb gereinigt oder für eine Reinigung ausgetauscht werden. Die Entfernung von Kleberesten kann also gezielt über das Sieb gesteuert werden.

Ebenso kann in der Vorrichtung zum Reinigen einer Reinigungslauge in einem Reinigungssystem 200 gemäß Figur 3 die Reinigungslauge durch wenigstens ein beheiztes Sieb, beispielsweise das Sieb 5A gefiltert werden. Dabei kann das Sieb 5A gegenüber Raumtemperatur eine erhöhte Temperatur aufweist. Das Sieb 5A kann zu einem geeigneten Zeitpunkt gespült werden, insbesondere wenn es beheizt wird. Dadurch können an der Filteroberfläche anhaftende Medien noch besser von dem Sieb abgelöst werden. Es ist ebenso möglich, die Filtration durch das Sieb 5A vorzunehmen und es kann zusätzlich wenigstens ein weiteres Sieb, beispielsweise das Sieb 5B, im Wesentlichen parallel dazu gespült werden. Dabei kann die Spülung des anderen Siebes, hier Sieb 5B, insbesondere ebenfalls dann erfolgen, wenn das Sieb 5B beheizt wird. Es ist ebenso möglich, dass das Sieb 5B eine andere Temperatur aufweist. Die Spülung kann zu einem geeigneten Zeitpunkt ein- oder ausgeschaltet werden. Es kann also ein bestimmtes Sieb durch Spülen gereinigt werden. Währenddessen können ein oder mehrere andere Siebe weiterhin zum Filtrieren verwendet werden. Dadurch kann ein ausgewähltes Sieb gezielt gereinigt werden, insbesondere gespült werden, ohne dass die Filtrierung durch die anderen Siebe unterbrochen werden muss.

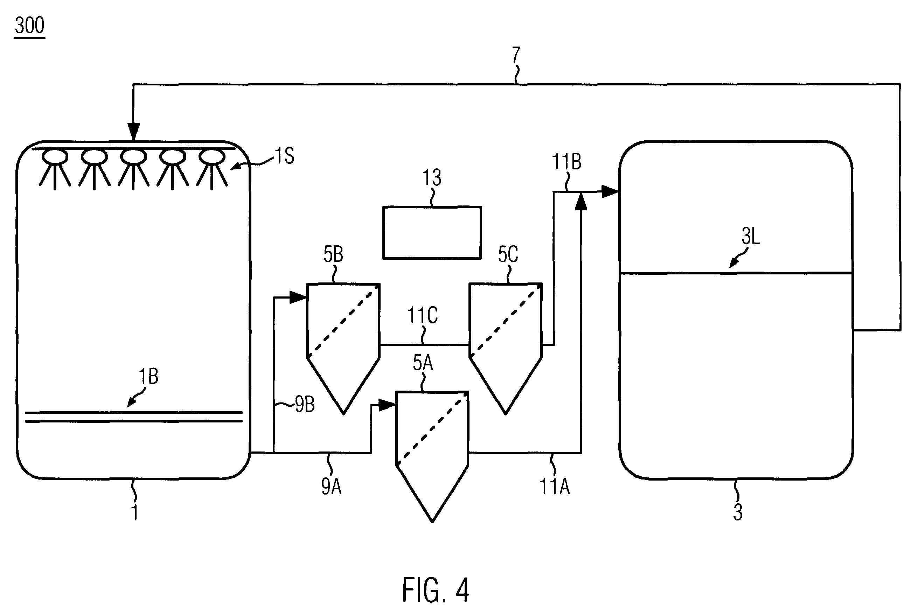

Die Figur 4 zeigt eine schematische Ansicht einer Vorrichtung 300 zum Reinigen einer Reinigungslauge in einem Reinigungssystem, ähnlich wie in den Figuren 2 oder 3, mit hintereinandergeschalteten Sieben. In der Figur 4 sind drei Siebe 5A, 5B und 5C gezeigt. Das Sieb 5C ist hinter das Sieb 5B geschaltet. Das bedeutet, dass eine zweifache Filtrierung stattfinden kann. Somit kann die bereits durch das Sieb 5B gefilterte Flüssigkeit erneut durch das Sieb 5C gefiltert werden. Das Sieb 5C kann insbesondere unmittelbar hinter dem Sieb 5A vorgesehen sein. Das bedeutet, dass keine wesentlichen strukturellen Elemente außer dem Verbindungsrohr 11C zwischen den beiden Sieben vorgesehen sind. Das Verbindungsrohr 11B verbindet das Sieb 5C mit dem Reinigungslaugentank 3, wie bereits in den Figuren 1 - 3 beschrieben. Die Siebe 5A, 5B und 5C können jeweils individuell beheizbar sein und durch die Temperaturkontrolleinheit 13 individuell in ihrer jeweiligen Temperatur regelbar sein, um die Siebe an die Filtrieranforderungen des Systems anpassen zu können. Die Figur 4 zeigt rein beispielhaft drei Siebe. Es ist aber ebenso möglich, nur zwei Siebe nacheinander zu schalten. Ebenso ist es möglich mehr als drei Siebe zu verwenden und parallel oder nacheinander, also sequentiell einzusetzen. Beispielsweise kann das Sieb 5C auch derart vorgesehen sein, dass es zu filtrierende Flüssigkeit aus beiden Siebe 5A und 5B erhält.

## Patentansprüche

1. Reinigungssystem (100, 101, 200) zum Reinigen von Gegenständen umfassend:
eine Waschvorrichtung;
eine Vorrichtung zum Reinigen einer Reinigungslauge in dem Reinigungssystem (100, 101, 200, 300), **dadurch gekennzeichnet, dass** die Vorrichtung ein oder mehrere beheizbare Siebe (5, 5A, 5B) zum Filtern der Reinigungslauge umfasst.

2. Reinigungssystem (100, 101, 200) gemäß Anspruch 1, wobei die Vorrichtung zum Reinigen der Reinigungslauge mindestens zwei beheizbare Siebe (5, 5A, 5B) umfasst, die derart parallel angeordnet sind, dass sie ein paralleles Filtrieren durch beide Siebe (5, 5A, 5B) ermöglichen.

3. Reinigungssystem gemäß Anspruch 1 oder 2, wobei die Siebe (5, 5A, 5B) elektrisch beheizbar sind.

4. Reinigungssystem gemäß wenigstens einem der Ansprüche 1 - 3, die Vorrichtung ferner mit einer Temperaturkontrolleinheit (13), die zum kontinuierlichen oder intervallweisen Messen der Temperatur der Siebe (5, 5A, 5B) ausgebildet ist und zum Regeln der Temperatur der Siebe (5, 5A, 5B) innerhalb eines vorgegebenen Temperaturbereiches, und insbesondere ausgebildet ist, die elektrische Leistungsaufnahme der Siebe (5, 5A, 5B) zu regeln.

5. Reinigungssystem (100, 101, 200) gemäß Anspruch 4, wobei die Temperaturkontrolleinheit (13) zum Regeln der Temperatur jedes der Siebe (5, 5A, 5B) ausgebildet ist, wobei jedes der Siebe (5, 5A, 5B) einen eigenen vorgegebenen Temperaturbereich hat.

6. Reinigungssystem (100, 101, 200) gemäß Anspruch 5, wobei wenn die gemessene Temperatur des Siebes (5, 5A, 5B) außerhalb des vorgegebenen Temperaturbereiches des Siebes (5, 5A, 5B) liegt, die Temperaturkontrolleinheit (13) ausgebildet ist, die Temperatur automatisch nachzuregeln, so dass die Temperatur des Siebes (5, 5A, 5B) innerhalb des vorgegebenen Temperaturbereichs des Siebes (5, 5A, 5B) gebracht werden kann.

7. Reinigungssystem (100, 101, 200) gemäß wenigstens einem der Ansprüche 1 - 6, wobei die Siebe (5, 5A, 5B) ein Siebgewebe umfassen, das elektrisch leitendes Gewebe, beispielsweise aus Metallfäden, umfasst.

8. Reinigungssystem (100, 101, 200) gemäß wenigstens einem der Ansprüche 1 - 7, die Vorrichtung ferner mit wenigstens einem weiteren Sieb (5C), das nach einem ersten Sieb (5, 5A, 5B) geschaltet ist, insbesondere unmittelbar nach dem ersten Sieb (5, 5A, 5B), und ausgebildet ist, die das erste Sieb filtrierte Reinigungsflüssigkeit zu filtrieren.

9. Reinigungssystem (100, 101, 200) gemäß einem der Ansprüche 1 - 8, wobei die Waschvorrichtung eine Flaschenwaschmaschine oder eine Maschine zum Reinigen von PET-Flakes ist.

10. Verfahren zum Reinigen einer Reinigungslauge in einem Reinigungssystem (100, 101, 200) mit einem oder mehreren beheizbaren Sieben (5, 5A, 5B), umfassend:
Filtern der Reinigungslauge;
Beheizen eines oder mehrerer Siebe (5, 5A, 5B) zur Beeinflussung des Anhaftens von klebrigem Material an die Siebe (5, 5A, 5B).

11. Verfahren gemäß Anspruch 10, ferner mit dem Schritt: paralleles Filtern der Reinigungslauge durch wenigstens zwei Siebe (5, 5A, 5B).

12. Verfahren gemäß Anspruch 10 oder 11, ferner mit dem Schritt: Spülen wenigstens eines der Siebe (5, 5A, 5B), insbesondere Spülen wenigstens des einen oder mehrerer der beheizten Siebe.

13. Verfahren gemäß wenigstens einem der Ansprüche 10 - 12, wobei die Siebe (5, 5A, 5B) elektrisch beheizbar sind.

14. Verfahren gemäß wenigstens einem der Ansprüche 10 - 13, weiterhin umfassend: kontinuierliches oder intervallweises Messen der Temperatur der Siebe (5, 5A, 5B), und Regeln der Temperatur der Siebe (5, 5A, 5B) innerhalb eines vorgegebenen Temperaturbereiches, insbesondere Regeln der elektrischen Leistungsaufnahme der Siebe (5, 5A, 5B).

15. Verfahren gemäß Anspruch 14, weiterhin umfassend: wenn die gemessene Temperatur des Siebes (5, 5A, 5B) außerhalb des vorgegebenen Temperaturbereiches liegt, Nachregeln der Temperatur des Siebes (5, 5A, 5B), so dass die Temperatur des Siebes (5, 5A, 5B) innerhalb des vorgegebenen Temperaturbereichs gebracht werden kann, wobei insbesondere jedes Sieb einen eigenen Temperaturbereich hat.

16. Verfahren gemäß wenigstens einem der Ansprüche 10 - 15, wobei die Siebe (5, 5A, 5B) ein Siebgewebe umfasst, das elektrisch leitendes Gewebe, beispielsweise aus Metallfäden, umfasst.

17. Verfahren gemäß wenigstens einem der Ansprüche 10 - 16, ferner mit wenigstens einem weiteren Sieb (5C), das nach einem ersten Sieb (5, 5A, 5B) geschaltet ist, insbesondere unmittelbar nach dem ersten Sieb (5, 5A, 5B), und ausgebildet ist, die das erste Sieb filtrierte Reinigungsflüssigkeit zu filtrieren.

## Claims

1. Cleaning system (100, 101, 200) for cleaning articles, comprising:
a washing device;
a device for cleaning a cleaning lye in the cleaning system (100, 101, 200, 300), **characterized in that** the device comprises one or a plurality of heatable sieves (5, 5A, 5B) for filtering the cleaning lye.

2. Cleaning system (100, 101, 200) according to claim 1, wherein the device for cleaning the cleaning lye comprises at least two heatable sieves (5, 5A, 5B) that are arranged in parallel such that they allow parallel filtration by both sieves (5, 5A, 5B).

3. Cleaning system according to claim 1 or 2, wherein the sieves (5, 5A, 5B) are electrically heatable.

4. Cleaning system according to at least one of claims 1 to 3, the device further comprising a temperature control unit (13) which is configured to measure the temperature of the sieves (5, 5A, 5B) continuously or in intervals and to control the temperature of the sieves (5, 5A, 5B) within a predetermined temperature range, and is particularly configured to control the electrical power consumption of the sieves (5, 5A, 5B).

5. Cleaning system (100, 101, 200) according to claim 4, wherein the temperature control unit (13) is configured to control the temperature of each of the sieves (5, 5A, 5B), wherein each of the sieves (5, 5A, 5B) has its own predetermined temperature range.

6. Cleaning system (100, 101, 200) according to claim 5, wherein when the measured temperature of the sieve (5, 5A, 5B) is outside the predetermined temperature range of the sieve (5, 5A, 5B), the temperature control unit (13) is configured to automatically readjust the temperature, so that the temperature of the sieve (5, 5A, 5B) can be brought within the predetermined temperature range of the sieve (5, 5A, 5B).

7. Cleaning system (100, 101, 200) according to at least one of claims 1 to 6, wherein the sieves (5, 5A, 5B) comprise a sieve fabric which comprises electrically conductive fabric, e.g. of metal filaments.

8. Cleaning system (100, 101, 200) according to at least one of claims 1 to 7, the device further comprising at least one further sieve (5C) which is arranged after a first sieve (5, 5A, 5B), particularly directly after the first sieve (5, 5A, 5B), and configured to filter the cleaning liquid filtered by the first sieve.

9. Cleaning system (100, 101, 200) according to any one of claims 1 to 8, wherein the washing device is a bottle washer or a machine for cleaning PET flakes.

10. Method for cleaning a cleaning lye in a cleaning system (100, 101, 200) with one or a plurality of heatable sieves (5, 5A, 5B), comprising:
filtering the cleaning lye;
heating one or a plurality of sieves (5, 5A, 5B) for influencing the adhesion of sticky material to the sieves (5, 5A, 5B).

11. Method according to claim 10, further comprising the step of: parallel filtering of the cleaning lye by at least two sieves (5, 5A, 5B).

12. Method according to claim 10 or 11, further comprising the step of: rinsing at least one of the sieves (5, 5A, 5B), particularly rinsing at least one or a plurality of the heated sieves.

13. Method according to at least one of claims 10 to 12, wherein the sieves (5, 5A, 5B) are electrically heatable.

14. Method according to at least one of claims 10 to 13, further comprising: measuring the temperature of the sieves (5, 5A, 5B) continuously or in intervals, and controlling the temperature of the sieves (5, 5A, 5B) within a predetermined temperature range, particularly controlling the electrical power consumption of the sieves (5, 5A, 5B).

15. Method according to claim 14, further comprising: when the measured temperature of the sieve (5, 5A, 5B) is outside the predetermined temperature range, readjusting the temperature of the sieve (5, 5A, 5B), so that the temperature of the sieve (5, 5A, 5B) can be brought within the predetermined temperature range, wherein particularly each sieve has its own temperature range.

16. Method according to at least one of claims 10 to 15, wherein the sieves (5, 5A, 5B) comprise a sieve fabric which comprises electrically conductive fabric, for instance of metal filaments.

17. Method according to at least one of claims 10 to 16, further comprising at least one further sieve (5C) which is arranged after a first sieve (5, 5A, 5B), particularly directly after the first sieve (5, 5A, 5B), and configured to filter the cleaning liquid filtered by the first sieve.

## Revendications

1. Système de nettoyage (100, 101, 200) pour assurer le nettoyage d'objets, comprenant :
un dispositif de lavage ;
un dispositif d'épuration d'une lessive de nettoyage dans le système de nettoyage (100, 101, 200, 300), **caractérisé en ce que** le dispositif comprend un ou plusieurs tamis de filtration (5, 5A, 5B) pouvant être chauffés et destinés à filtrer la lessive de nettoyage.

2. Système de nettoyage (100, 101, 200) selon la revendication 1, dans lequel le dispositif d'épuration de la lessive de nettoyage comprend au moins deux tamis de filtration (5, 5A, 5B) pouvant être chauffés, qui sont agencés en parallèle de manière à permettre une filtration en parallèle à travers les deux tamis de filtration (5, 5A, 5B).

3. Système de nettoyage selon la revendication 1 ou la revendication 2, dans lequel les tamis de filtration (5, 5A, 5B) peuvent être chauffés par voie électrique.

4. Système de nettoyage selon l'une au moins des revendications 1 - 3, le dispositif comprenant par ailleurs une unité de contrôle de température (13), qui est conçue pour mesurer en continu ou par intervalles la température des tamis de filtration (5, 5A, 5B), et pour réguler la température des tamis de filtration (5, 5A, 5B) pour qu'elle se situe à l'intérieur d'une plage de température prédéterminée, et est notamment conçue pour réguler la puissance électrique absorbée par les tamis de filtration (5, 5A, 5B).

5. Système de nettoyage (100, 101, 200) selon la revendication 4, dans lequel l'unité de contrôle de température (13) est conçue pour réguler la température de chacun des tamis de filtration (5, 5A, 5B), chacun des tamis de filtration (5, 5A, 5B) possédant une plage de température prédéterminée, qui lui est propre.

6. Système de nettoyage (100, 101, 200) selon la revendication 5, dans lequel lorsque la température mesurée du tamis de filtration (5, 5A, 5B) se situe en-dehors de la plage de température prédéterminée du tamis de filtration (5, 5A, 5B), l'unité de contrôle de température (13) est conçue pour réajuster automatiquement la température par régulation, de manière à ce que la température du tamis de filtration (5, 5A, 5B) puisse être amenée à l'intérieur de la plage de température prédéterminée du tamis de filtration (5, 5A, 5B).

7. Système de nettoyage (100, 101, 200) selon l'une au moins des revendications 1 - 6, dans lequel les tamis de filtration (5, 5A, 5B) comportent un tissu de tamis de filtration, qui comprend un tissu électriquement conducteur, par exemple en fils métalliques.

8. Système de nettoyage (100, 101, 200) selon l'une au moins des revendications 1 - 7, le dispositif comprenant par ailleurs au moins un tamis de filtration supplémentaire (5C), qui est monté en aval ou après un premier tamis de filtration (5, 5A, 5B), notamment directement après le premier tamis de filtration (5, 5A, 5B), et est conçu pour filtrer le liquide de nettoyage filtré par le premier tamis de filtration.

9. Système de nettoyage (100, 101, 200) selon l'une au moins des revendications 1 - 8, dans lequel le dispositif de lavage est une machine de lavage de bouteilles ou une machine destiné au lavage de flocons de PET.

10. Procédé destiné à épurer une lessive de nettoyage dans un système de nettoyage (100, 101, 200) qui comporte un ou plusieurs tamis de filtration (5, 5A, 5B), le procédé comprenant :
la filtration de la lessive de nettoyage ;
le chauffage d'un ou de plusieurs tamis de filtration (5, 5A, 5B) en vue d'influencer l'adhésion de matières collantes sur les tamis de filtration (5, 5A, 5B).

11. Procédé selon la revendication 10, comprenant par ailleurs l'étape suivante : la filtration en parallèle de la lessive de nettoyage, à travers au moins deux tamis de filtration (5, 5A, 5B).

12. Procédé selon la revendication 10 ou la revendication 11, comprenant par ailleurs l'étape suivante : le rinçage de l'un au moins des tamis de filtration (5, 5A, 5B), notamment le rinçage dudit un ou des plusieurs tamis de filtration chauffés.

13. Procédé selon l'une au moins des revendications 10 - 12, d'après lequel les tamis de filtration (5, 5A, 5B) peuvent être chauffés par voie électrique.

14. Procédé selon l'une au moins des revendications 10 - 13, comprenant par ailleurs : la mesure en continu ou par intervalles de la température des tamis de filtration (5, 5A, 5B) et la régulation de la température des tamis de filtration (5, 5A, 5B) pour qu'elle se situe à l'intérieur d'une plage de température prédéterminée, notamment la régulation de la puissance électrique absorbée par les tamis de filtration (5, 5A, 5B).

15. Procédé selon la revendication 14, comprenant par ailleurs : lorsque la température mesurée du tamis de filtration (5, 5A, 5B) se situe en-dehors de la plage de température prédéterminée, le réajustement de la température du tamis de filtration (5, 5A, 5B) par régulation, de manière à ce que la température du tamis de filtration (5, 5A, 5B) puisse être amenée à l'intérieur de la plage de température prédéterminée, chaque tamis de filtration possédant sa propre plage de température.

16. Procédé selon l'une au moins des revendications 10 - 15, d'après lequel les tamis de filtration (5, 5A, 5B) comportent un tissu de tamis de filtration, qui comprend un tissu électriquement conducteur, par exemple en fils métalliques.

17. Procédé selon l'une au moins des revendications 10 - 16, comprenant par ailleurs au moins un tamis de filtration supplémentaire (5C), qui est monté en aval ou après un premier tamis de filtration (5, 5A, 5B), notamment directement après le premier tamis de filtration (5, 5A, 5B), et est conçu pour filtrer le liquide de nettoyage filtré par le premier tamis de filtration.
